(19) **Europäisches Patentamt European Patent Office Office européen des brevets**

(11) **EP 3 453 251 B1**

(12) **EUROPEAN PATENT SPECIFICATION**

(45) Date of publication and mention of the grant of the patent:
**19.05.2021 Bulletin 2021/20**

(51) Int Cl.:
**A01F 25/14** *(2006.01)*     **A01F 25/22** *(2006.01)*
**A23B 9/08** *(2006.01)*

(21) Application number: **17823482.9**

(22) Date of filing: **02.06.2017**

(86) International application number:
**PCT/CN2017/086954**

(87) International publication number:
**WO 2018/006670 (11.01.2018 Gazette 2018/02)**

(54) **INTEGRATED GRAIN DRYING/STORAGE/REGULATING BIN WITH BUILT-IN BELLOWS AND EXTERNALLY DISPOSED COMPARTMENT**

INTEGRIERTER GETREIDETROCKNUNGS-/-LAGER-/-REGULIERUNGSBUNKER MIT EINGEBAUTEM FALTENBALG UND AUSSENLIEGENDEM FACH

BAC DE SÉCHAGE/STOCKAGE/RÉGULATION DE GRAINS INTÉGRÉ DOTÉ DE SOUFFLET INTÉGRÉ ET DE COMPARTIMENT DISPOSÉ EXTÉRIEUREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2016 CN 201610521315**

(43) Date of publication of application:
**13.03.2019 Bulletin 2019/11**

(73) Proprietor: **The Institute of Food Science and Technology,**
**Jiangxi Academy of Agricultural Sciences**
**Qingyunpu District**
**Nanchang**
**Jiangxi 330200 (CN)**

(72) Inventors:
• **MA, Yanbo**
**Nanchang**
**Jiangxi 330200 (CN)**
• **FENG, Jianxiong**
**Nanchang**
**Jiangxi 330200 (CN)**
• **ZHOU, Jinying**
**Nanchang**
**Jiangxi 330200 (CN)**

• **HE, Jialin**
**Nanchang**
**Jiangxi 330200 (CN)**
• **ZHU, Xuejing**
**Nanchang**
**Jiangxi 330200 (CN)**
• **CHEN, Guipeng**
**Nanchang**
**Jiangxi 330200 (CN)**
• **XIONG, Wenhua**
**Nanchang**
**Jiangxi 330200 (CN)**

(74) Representative: **Lavoix**
**Bayerstraße 83**
**80335 München (DE)**

(56) References cited:
**CN-A- 105 993 422       CN-U- 202 722 399**
**CN-U- 203 206 776       CN-U- 204 443 210**
**CN-U- 205 266 342       CN-U- 205 794 165**
**FR-A1- 2 413 028         US-A- 4 337 584**
**US-A1- 2009 094 853    US-A1- 2016 128 376**

## Description

### TECHNICAL FIELD

The present invention relates to a grain storage bin, and in particular to an integrated grain drying/storage/regulating bin with a built-in ventilation pipe and an externally disposed compartment.

### BACKGROUND

There are mainly three grain drying methods in domestic, firstly, manual sun-drying is adopted, although the method does not consume energy, the labor cost and intensity are high and this method is also restricted by sun-drying field and climate conditions; secondly, a ground groove for ventilation and drying is adopted, although the method consumes low energy, the processing capacity is large, the drying is not uniform, and it is limited by moisture of the grain when being put into storage; thirdly, a drying machine is used for drying, although the method has high drying efficiency and short drying time without limitation of the grain moisture when being put into storage, the energy consumption is relatively high, the quality is reduced due to the fact that the grain is forced maturity because of rapid drying, and it is easy to generate crackle or break. It mainly adopts a large flat bin in domestic, and a small amount of round bins are also arranged, but safe storage of grain in summer and insect and mildew prevention are two existing problems that are difficult to be solved. Although ventilation and cooling may allow the grain to be safely stored in summer, the consumption can be high, and condensation is easy to be generated on the grain surface, which results in the fact that partial grain in the bins may become yellow. Using medicine for fumigation and storage can prevent grain from pests, but may be easily cause drug residue. Some grain processing enterprises in China generally reflect that grains stored for a long time has a reduced moisture and toughness, which affects the yield rate and the product quality of deep processing of grain.

In addition, as described in US2009094853A1, positive pressure ventilation is used to adjust the he grains in the integrated bins, which will lead to condensation phenomenon and the grains cannot be adjusted evenly and effectively. Furthermore, US2016128376A1 discloses a system comprising a first air tunnel system configured to be coupled to a wall of a food storage bin. positive pressure ventilation, in which a positive pressure ventilation is also used, there will be a condensation phenomenon.

### SUMMARY

The present invention provides an integrated grain drying/storage/regulating bin with a built-in ventilation pipe and an externally disposed compartment, which has the functions of heating and drying, refrigerating and cooling, and humidifying and conditioning.

The present invention according to claim 1 is achieved by an integrated grain drying/storage/regulating bin with a built-in ventilation pipe and an externally disposed compartment comprising: an integrated bin body, a grain distributing device, an external compartment provided outside the integrated bin body, an internal ventilation pipe provided inside the integrated bin body, a heating device, a refrigerating device, a humidifying device, an air flow distributing device, a centrifugal fan, and an air brake, wherein, a top of the integrated bin body is provided with a grain feed port, the grain distributing device is disposed inside the grain feed port and at a lower end thereof, a middle portion of the integrated bin body is provided with several levels of the internal ventilation pipe, the external compartment is provided at a periphery of the integrated bin body; the heating device, the refrigerating device, and the humidifying device are disposed outside the integrated bin body, and are connected with the air flow distributing device through a duct; a plurality of air suction ducts are arranged in the integrated bin from top to bottom, one end of the air suction duct is communicated with the internal ventilation pipe in the integrated bin, the other end of the air suction duct is connected with the air brake, and all the air suction suctions are connected with a centrifugal fan.

The invention has the following advantages: 1. when heating and drying (refrigerating and cooling, humidifying and conditioning) the grains in the integrated bins, condensation phenomenon can be avoided, since the bin adopts negative pressure ventilation; 2. The central portion of the integrated bin body is provided with the internal ventilation pipe, the external compartment is provided at a periphery of the integrated bin body, hot air (cold air, wet air) passes through the grain layer of the bin along a short path with a strong penetrability and a small wind resistance, due to the extraction effect of the centrifugal fan, thus helping reduce the production cost of the heating and drying (refrigerating and cooling, humidifying and conditioning); 3. by means of the extraction effect of the centrifugal fan, hot air (cold air, wet air) is guided from the air flow distributing device at the bottom of the bin into the external compartment of the integrated bin, and the air introduced into the integrated bin has a balanced distribution, thus realizing uniformly heating and drying (refrigerating and cooling, humidifying and conditioning) for the grains in the bin; 4. a top of the integrated bin body is provided with the grain distributing device, so that the grain can be uniformly distributed in the bin and automatic grading during grain feeding can be reduced, thus facilitating grain storage and preventing the wind net of the grain layer in the bin from being blocked or short-circuited due to the automatic grading of the grains; 5. a suction duct is arranged on each layer of an inlet of the centrifugal fan, and is connected with an air outlet of a plurality of layers of built-in ventilation pipe arranged in the center of the integrated bin, and is provided with an electric air brake which can be controlled to be automatically opened or closed within each layer by controlling an on-line temperature monitoring device, a moisture monitoring device and related self-control device, to allow layered introduction of hot air (cold air, wet air) into the grain layer, so as to allow the grain in the bin to realize split heating and drying (refrigerating and cooling, humidifying and conditioning); 6. low-temperature or quasi-low-temperature storage can be realized, and the purposes of zero use of chemical agents, safety storage of grain in summer and insect and mildew prevention can be achieved, so that the storage quality of the grain can be guaranteed; 7. the toughness of the grain can be enhanced, grain breaking rate can be reduced during deep processing, and yield rate and product quality can be improved; 8. the heating device has a relatively wide heat source carrier, e.g. liquid such as hot water and heat conduction oil, gas such as hot air, heat source bodies such as electric furnace wire, electric heating tube, and a carbon crystal electric heating plate. The dryer is suitable for drying corn, wheat, rice, soybean, peanut, sesame, walnut, lotus seed, pistachio nut, rapeseed, camellia seed, sunflower seed and the like.

## BRIEF DESCRIPTION OF THE DRAWINGS

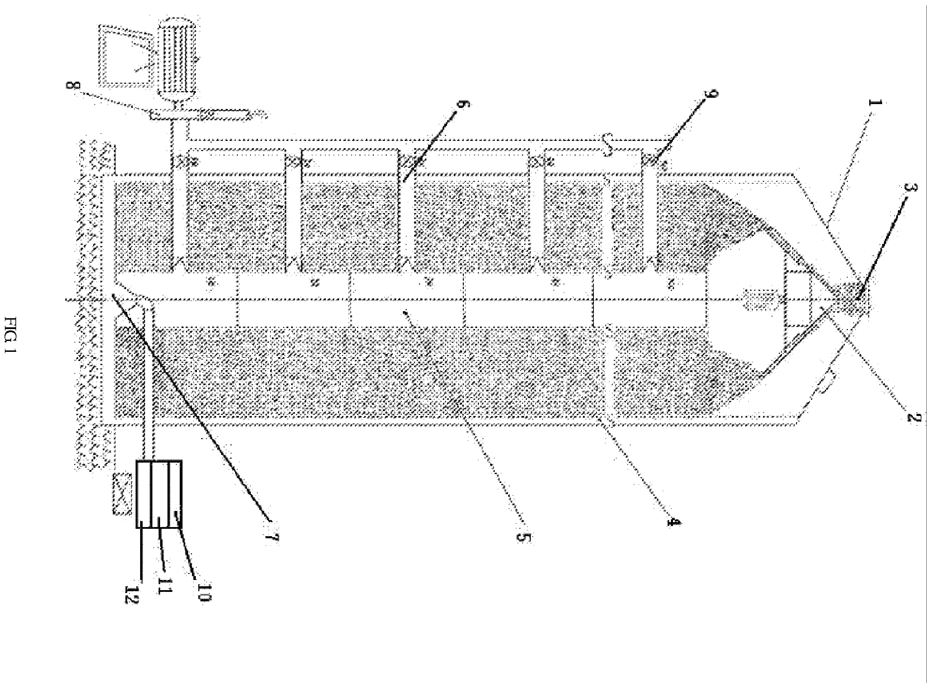

FIG. 1 is a schematic diagram of a working structure of the present invention.

Demonstration for reference numerals: 1-integrated bin, 2- grain distributing device, 3-grain feed port, 4-external compartment, 5-internal ventilation pipe, 6-suction duct, 7-air flow distributing device, 8-centrifugal fan, 9-air brake, 10-heating device, 11-refrigerating device, 12- humidifying device.

## DETAILED DESCRIPTION

As shown in Fig.1, the present invention comprises: an integrated bin body 1, a grain distributing device 2, an external compartment 4 provided outside the integrated bin body, an internal ventilation pipe 5 provided inside the integrated bin body, a heating device 10, a refrigerating device 11, a humidifying device 12, an air flow distributing device 7, a centrifugal fan 8, and an air brake 9, wherein, a top of the integrated bin body is provided with a grain feed port 3, the grain distributing device 2 is disposed inside the grain feed port 3 and at a lower end thereof, a middle portion of the integrated bin body is provided with several levels of the internal ventilation pipe 5, the external compartment 4 is provided at a periphery of the integrated bin body; the heating device 10, the refrigerating device 11, and the humidifying device 12 are disposed outside the integrated bin body, and are connected with the air flow distributing device 7 through a duct; a plurality of air suction ducts 6 are arranged in the integrated bin 1 from top to bottom, one end of the air suction duct 6 is communicated with the internal ventilation pipe 5 in the integrated bin, the other end of the air suction duct is connected with the air brake 9, and all the air suction suctions 6 are connected with a centrifugal fan 8.

Engineering embodiment: an integrated grain drying/storage/regulating bin with a storage capacity of 200 tons, a late long-grain rice with water content of ≤17.5% after a first-time drying is carried out, a second-time drying with a heat source of a coal-fired hot water boiler and a heating and drying period of 5 days, and moisture control standards of late long-grain rice after drying is ≤ 14.5%; the dried late rice is stored in the bin, and kept the temperature at the range of 15-20 °C, by carrying out four times of refrigerating and cooling in the bin every year, so as to achieve low-temperature or quasi-low-temperature storage; for the grain with relatively low moisture and stored for more than one year, humidifying and conditioning are carried out for 7-10 days before ex-bin processing, and the moisture content of the grain after humidifying and conditioning are controlled within 14.2%.

I Heating and Drying

1. Late long-grain rice with water content of ≤17.5% is sent into the integrated bin after first-time drying, followed by uniform distribution of the late long-grain rice in the bin by a grain distributing device.

2. Moisture control standards of late long-grain rice is preset to be ≤ 14.5% after drying.

3. Control requirements of drying temperature is preset to be ≤ 45 °C.

4. A hot water boiler is started, and a temperature of hot water is preset and controlled to be lower than 90 °C.

5. The centrifugal fan is started, wherein a bottommost air suction duct of air suction duct 1# is opened, and hot air is introduced into the external compartment of the integrated bin through the air flow distributing device at a bottom of the bin by extraction effect of the centrifugal fan, passes through a rice layer and enters inner ventilation pipe 1# (the bottommost ventilation pipe); and the rice at the first rice layer (the bottommost layer) is heated to be dried gradually, and waste gas is sucked from the inner ventilation pipe 1# by air suction duct 1# and discharged out of the room.

6. Temperature of hot air entering a dryer is finely adjusted according to the temperature control requirement of the rice in the drying process to ensure the drying temperature of the rice to be $\leq 45$ °C, so as to meet the requirements of low-temperature low-speed drying.

7. When temperature of the first rice layer reaches 45 °C, an air brake on the air suction duct 1# is controlled to be automatically closed and an air brake on the air suction duct 2# is controlled to be automatically started by an on-line temperature monitoring device of the first rice layer, and hot air enters a second rice layer, so as to cause the second layer rice to be heated and gradually dried and to cause the first rice layer to enter a tempering stage.

8. When temperature of the $N^{th}$ rice layer , i.e. the last layer rice, reaches 45 °C, an air brake on an air suction duct of the $N^{th}$ layer is controlled to be automatically closed and an air brake on the air suction duct 1# is controlled to be automatically started by an on-line temperature monitoring device of the $N^{th}$ rice layer, and hot air re-enters the first rice layer, so as to cause the first rice layer to be heated and gradually dried and to cause the $N^{th}$ rice layer to enter a tempering stage.

9. If a moisture of most rice in the bin reaches 14.5%, and the moisture of the rice of one or two layers is still more than 14.5%, an air brake on an air suction duct of the layer is controlled to be automatically started by an on-line moisture monitoring device and a self-control device related thereof in the bin, and hot air continues to enter the layer, so as to cause the rice at this layer to be heated and gradually dried and to cause the rice at other layers to enter a tempering stage.

10. When the moisture of the rice in the bin reaches 14.5%, the centrifugal fan, a hot water pump and other equipment is allowed to stop working by the on-line moisture monitoring device and the self-control device related thereto in the bin, and storage is carried out after finishing heating and drying.

II Refrigerating and Cooling

1. the temperature for entering into the grain layer is preset to be $\leq 10$ °C.

2. the control requirement of grain temperature after cooling is preset to be $\leq 15$ °C

3. the control requirement of grain temperature after natural warming is preset to be $\leq 20$ °C.

4. A refrigerating device is started, and an outlet air temperature is finely adjusted to be 6-8 °C in general, according to the temperature for entering into the grain layer preset to be $\leq 10$ °C.

5. When the grain temperature after natural warming reaches 20 °C in the bin, the online temperature monitoring device in the bin would send out an over-temperature signal and giving an alarm.

6. The centrifugal fan is started, wherein a bottommost air suction duct of air suction duct 1# is opened, and cold air is introduced into the external compartment of the integrated bin through the air flow distributing device at a bottom of the bin by extraction effect of the centrifugal fan, passes through a rice layer and enters a bottommost ventilation pipe which is inner ventilation pipe 1#; and the rice at the bottommost layer of a first rice layer is heated to be cooled gradually, and waste gas is sucked from the inner ventilation pipe 1# by air suction duct 1# and discharged out of the room.

7. When temperature of the first rice layer reaches 15 °C, an air brake on the air suction duct 1# is controlled to be automatically closed and an air brake on the air suction duct 2# is controlled to be automatically started by an on-line temperature monitoring device of the first rice layer , and cold air enters a second rice layer, so as to cause the second layer rice to be cooled and gradually reduced temperature and to cause the first rice layer to enter a tempering stage.

8. When temperature of the $N^{th}$ rice layer , i.e. the last layer rice, reaches 15 °C, an air brake on an air suction duct of the $N^{th}$ layer is controlled to be automatically closed and an air brake on the air suction duct 1# is controlled to be automatically started by an on-line temperature monitoring device of the $N^{th}$ rice layer , and hot air re-enters the first rice layer, so as to cause the first rice layer to be cooled and gradually reduced temperature and to cause the $N^{th}$ rice layer to enter a tempering stage.

9. If a temperature of most rice in the bin reaches 15 °C, and the temperature of the rice of one or two layers is still more than 15 °C, an air brake on an air suction duct of the layer is controlled to be automatically started by an on-line temperature monitoring device and a self-control device related thereof in the bin, and hot air continues to enter the layer so as to cause the rice of the layer to be cooled and gradually reduced temperature and to cause the rice of the other layer to enter a tempering stage.

10. When the temperature of the rice in the bin reaches 15 °C, the centrifugal fan, a hot water pump and other equipment is allowed to stop working by the on-line temperature monitoring device and the self-control device related thereto in the bin, and storage is carried out after finishing refrigerating and cooling.

III Humidifying and Conditioning

1. Air humidity for entering into the grain layer is preset to be ≥90%.

2. the grain moisture after humidifying and conditioning is preset to be ≤14.2%.

3. A device for humidifying and conditioning is started, and the air humidity after humidifying and conditioning is finely adjusted according to the air humidity for entering into the grain layer is preset to be ≥90%.

4. The centrifugal fan is started, wherein the air suction duct 1# (the bottommost air suction duct) is opened, and humid air is introduced into the external compartment of the integrated bin through the air flow distributing device at a bottom of the bin by extraction effect of the centrifugal fan, passes through a rice layer and enters the inner ventilation pipe 1# (the bottommost ventilation pipe), and the first rice layer contacts humid air and become humidified gradually, and waste gas is sucked from the inner ventilation pipe 1# by air suction duct 1# and discharged out of the room.

5. When moisture of the first rice layer reaches 14.2%, an air brake on the air suction duct 1# is controlled to be automatically closed and an air brake on the air suction duct 2# is controlled to be automatically started by an on-line moisture monitoring device of the first rice layer , and humid air enters a second rice layer, so as to cause the second layer rice to contact humid air and be humidified gradually, so as to cause the first rice layer to enter a tempering stage.

6. When moisture of the $N^{th}$ rice layer , i.e. the topside layer rice, reaches 14.2%, an air brake on an air suction duct of the $N^{th}$ layer is controlled to be automatically closed and an air brake on the air suction duct 1# is controlled to be automatically started by an on-line moisture monitoring device of the $N^{th}$ rice layer , and humid air re-enters the first rice layer, so as to cause the first rice layer to be humidified and conditioned again, and then the $N^{th}$ layer rice enters a tempering stage.

7. If a moisture of most rice in the bin reaches 14.2%, and the moisture of the rice of one or two layers is still more than 14.2%, an air brake on an air suction duct of the layer is controlled to be automatically started by an on-line moisture monitoring device and a self-control device related thereof in the bin, and humid air continues to enter the layer, so as to cause the rice of the layer to continue to be humidified and conditioned, and the rice at other layers enters a tempering stage.

8. When the moisture of the rice in the bin reaches 14.2%, the centrifugal fan, a hot water pump and other equipment are allowed to be shut down by the on-line moisture monitoring device and the self-control device related thereto in the bin, and humidifying and conditioning are finished.

IV Production cost accounting

1. Heating and drying cost: coal consumption cost (1 ton/day × 5 days × 600 RMB/ton) = 3000 RMB; power consumption cost (20 kw × 24 hours × 5 days × 0.8 RMB /degree)) = 1920 RMB; labor cost (1 person × 5 days × 200 RMB/day) = 1000 RMB.

$$\text{Total cost} = 3000 \text{ RMB} + 1920 \text{ RMB} + 1000 \text{ RMB} = 5920 \text{ RMB}$$

$$\text{Production cost} = 5920 \text{ RMB} \div 200 \text{ tons} = 29.6 \text{ RMB/ton.}$$

2. Refrigeration and cooling cost: power consumption cost (61 KW × 24 hours/time × 4 times/year × 0.8 RMB/degree) = 4684.8 RMB/year; labor cost (1 person × 4 days/year × 200 RMB/day)) = 800 RMB/year.

$$\text{Total cost} = 4684.8 \text{ RMB} + 800 \text{ RMB} = 5484.8 \text{ RMB/year.}$$

$$\text{Production cost} = 5854.8 \text{ RMB/200 tons} = 27.4 \text{ RMB / ton} \cdot \text{year.}$$

3. Humidifying and tempering cost: power consumption cost (16.5 KW × 48 hours × 0.8 RMB/degree) = 633.6 RMB; labor cost (1 person × 2 days × 200 RMB/day) = 400 RMB.

$$\text{Total cost} = 633.6 \text{ RMB} + 400 \text{ RMB} = 1033.6 \text{ RMB.}$$

$$\text{Production cost} = 1033.6 \text{ RMB} \div 200 \text{ tons} = 5.2 \text{ RMB/ton.}$$

**Claims**

**1.** An integrated grain drying/storage/regulating bin with a built-in ventilation pipe and an externally disposed compartment comprising:

an integrated bin body (1),
a grain distributing device (2),
an external compartment (4) provided outside the integrated bin body (1),
an internal ventilation pipe provided inside the integrated bin body (1),
a heating device (10),
a refrigerating device (11),
a humidifying device (12),
an air flow distributing device (7),
a centrifugal fan (8), and
an air brake (9),
wherein a top of the integrated bin body (1) is provided with a grain feed port, the grain distributing device (2) is disposed inside the grain feed port and at a lower end thereof, a middle portion of the integrated bin body (1) is provided with several levels of the internal ventilation pipe, the external compartment (4) is provided at a periphery of the integrated bin body (1); **characterized in that** the air flow distributing device is located at the bottom of the bin and communicated with the external compartment installed on the inner periphery of the integrated bin body and further communicated with the internal ventilation pipe provided inside the integrated bin body via the external compartment and a grain layer;

the heating device (10), the refrigerating device (11), and the humidifying device (12) are disposed outside the integrated bin body (1), and are connected with the air flow distributing device (7) through a duct;

a plurality of air suction ducts (6) are arranged in the integrated bin from top to bottom, one end of the air suction duct is communicated with the internal ventilation pipe in the integrated bin, the other end of the air suction duct is connected with the air brake (9), and

all the air suction ducts are connected with a centrifugal fan (8), and the integrated grain drying/storage/regulating bin further comprising an on-line temperature monitoring device, an on-line moisture monitoring device and a self-control device related thereof to automatically start or close the air brake (9) on the air suction ducts (6) and to the control centrifugal fan (8), the heating device (10), the refrigerating device (11), and the humidifying device (12).

## Patentansprüche

1. Integrierter Getreidetrocknungs-/-lager-/-regulierungssilo mit einem eingebauten Belüftungsrohr und außen angeordneten Fach, umfassend:

einen integrierten Silokörper (1),
eine Kornverteilungsvorrichtung (2),
ein äußeres Fach (4), das außerhalb des integrierten Silokörpers (1) bereitgestellt ist,
ein internes Belüftungsrohr, das innerhalb des integrierten Silokörpers (1) bereitgestellt ist,
eine Heizvorrichtung (10),
eine Kühlvorrichtung (11),
eine Befeuchtungsvorrichtung (12),
eine Luftstromverteilungsvorrichtung (7),
ein Zentrifugalgebläse (8), und
eine Luftbremse (9),
wobei
eine Oberseite des integrierten Silokörpers (1) mit einer Kornzuführungsöffnung versehen ist, die Kornverteilungsvorrichtung (2) innerhalb der Kornzuführungsöffnung und an einem unteren Ende davon angeordnet ist, ein mittlerer Abschnitt des integrierten Silokörpers (1) mit mehreren Ebenen des internen Belüftungsrohrs versehen ist, das externe Fach (4) an einem Umfang des integrierten Silokörpers (1) bereitgestellt ist; **dadurch gekennzeichnet, dass**
sich die Luftstromverteilungsvorrichtung an dem Boden des Silos befindet und mit dem Außenfach in Kommunikation ist, das an dem inneren Umfang des integrierten Silokörpers installiert ist, und ferner über das äußere Fach und eine Kornschicht mit dem internen Belüftungsrohr in Kommunikation ist, das im Inneren des integrierten Silokörpers bereitgestellt ist;
die Heizvorrichtung (10), die Kühlvorrichtung (11) und die Befeuchtungsvorrichtung (12) außerhalb des integrierten Silokörpers (1) angeordnet sind und durch einen Kanal mit der Luftstromverteilungsvorrichtung (7) verbunden sind;
eine Vielzahl von Luftansaugkanälen (6) in dem integrierten Silo von oben nach unten angeordnet sind, ein Ende des Luftansaugkanals mit dem internen Belüftungsrohr in dem integrierten Silo in Kommunikation ist, das andere Ende des Luftansaugkanals mit der Luftbremse (9) verbunden ist und alle Luftansaugkanäle mit einem Zentrifugalgebläse (8) verbunden sind, und der integrierte Getreidetrocknungs-/-lager-/- regulierungssilo ferner umfassend eine Online-Temperaturüberwachungsvorrichtung, eine Online-Feuchtigkeitsüberwachungsvorrichtung und eine damit verbundene Selbststeuerungsvorrichtung zum automatischen Starten oder Schließen der Luftbremse (9) an den Luftansaugkanälen (6) und an dem Steuerzentrifugalgebläse (8), der Heizvorrichtung (10), der Kühlvorrichtung (11) und der Befeuchtungsvorrichtung (12).

## Revendications

1. Bac de séchage/stockage/régulation de grains intégré doté d'un tuyau de ventilation intégré et d'un compartiment disposé extérieurement comprenant :

un corps de bac intégré (1),
un dispositif de distribution de grains (2),
un compartiment externe (4) prévu à l'extérieur du corps de bac intégré (1),

un tuyau de ventilation interne prévu à l'intérieur du corps de bac intégré (1),

un dispositif de chauffage (10),

un dispositif de réfrigération (11),

un dispositif d'humidification (12),

un dispositif de distribution de flux d'air (7),

un ventilateur centrifuge (8), et

un frein à air (9),

dans lequel une partie supérieure du corps de bac intégré (1) est pourvue d'un orifice d'alimentation en grains, le dispositif de distribution de grains (2) est disposé à l'intérieur de l'orifice d'alimentation en grains et à une extrémité supérieure de celui-ci, une partie centrale du corps de bac intégré (1) est pourvue de plusieurs niveaux du tuyau de ventilation interne, le compartiment externe (4) est prévu à la périphérie du corps de bac intégré (1) ; **caractérisé en ce que** le dispositif de distribution de flux d'air est situé au fond du bac et communique avec le compartiment externe installé sur la périphérie interne du corps de bac intégré et communique en outre avec le tuyau de ventilation interne prévu à l'intérieur du corps de bac intégré par l'intermédiaire du compartiment externe et d'une couche de grains ;

le dispositif de chauffage (10), le dispositif de réfrigération (11) et le dispositif d'humidification (12) sont disposés à l'extérieur du corps de bac intégré (1) et sont reliés au dispositif de distribution de flux d'air (7) par l'intermédiaire d'un conduit ;

une pluralité de conduits d'aspiration d'air (6) sont agencés dans le bac intégré de haut en bas, une extrémité du conduit d'aspiration d'air communique avec le tuyau de ventilation interne dans le bac intégré, l'autre extrémité du conduit d'aspiration d'air est reliée au frein à air (9), et

tous les conduits d'aspiration d'air sont reliés à un ventilateur centrifuge et le bac de séchage/stockage/régulation de grains intégré comprend en outre un dispositif de surveillance de température en ligne, un dispositif de surveillance d'humidité en ligne et un dispositif auto-commandé associé à ceux-ci pour ouvrir ou fermer automatiquement le frein à air (9) sur les conduits d'aspiration d'air (6) et pour commander le ventilateur centrifuge (8), le dispositif de chauffage (10), le dispositif de réfrigération (11) et le dispositif d'humidification (12).

FIG. 1

**EP 3 453 251 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009094853 A1

- US 2016128376 A1